# EUROPÄISCHE PATENTSCHRIFT

(11) **EP 4 452 676 B1**
(45) Veröffentlichungstag und Bekanntmachung des Hinweises auf die Patenterteilung: **22.04.2026**
(21) Anmeldenummer: 22782470.3
(22) Anmeldetag: 07.09.2022
(51) Int. Cl.: B60H 1/00, B60H 1/32

(54) **KÜHLMITTELKREISLAUF FÜR OPTIMIERTES THERMOMANAGEMENT FÜR EIN ZUMINDEST TEILWEISE ELEKTRISCH ANGETRIEBENES KRAFTFAHRZEUG**
COOLANT CIRCUIT FOR OPTIMIZED THERMAL MANAGEMENT FOR AN AT LEAST PARTIALLY ELECTRICALLY OPERATED MOTOR VEHICLE
CIRCUIT DE LIQUIDE DE REFROIDISSEMENT DE GESTION THERMIQUE OPTIMISÉE DE VÉHICULE AUTOMOBILE AU MOINS PARTIELLEMENT ÉLECTRIQUE

(30) Priorität: 20.12.2021 DE 102021133801
(43) Veröffentlichungstag der Anmeldung: 30.10.2024
(73) Patentinhaber: Audi AG, 85045 Ingolstadt (DE)
(72) Erfinder: GRIESSL, Philipp, 83358 Seebruck (DE)
(86) Internationale Anmeldenummer: PCT/EP2022/074899
(87) Internationale Veröffentlichungsnummer: WO 2023/117162

(56) Entgegenhaltungen:
- WO-A1-2016/208550
- WO-A1-2021/122949
- US-A1- 2012 225 341
- US-A1- 2017 152 957

## Beschreibung

Die Erfindung betrifft ein zumindest teilweise elektrisch angetriebenes Kraftfahrzeug gemäß dem Oberbegriff von Anspruch 1 mit einem Kühlmittelkreislauf und einem Kältemittelkreislauf, wobei der Kühlmittelkreislauf ausgeführt ist mit einem ersten Kühlmittelstrang mit einer ersten Kühlmittelpumpe, wobei der erste Kühlmittelstrang mit einer Batteriespeichereinrichtung zu deren Kühlung oder Erwärmung verbunden ist; einem zweiten Kühlmittelstrang mit einer zweiten Kühlmittelpumpe, wobei der zweite Kühlmittelstrang mit weiteren Kraftfahrzeugkomponenten, insbesondere antriebsseitigen Komponenten, zu deren Kühlung oder Erwärmung verbunden ist; einem Wärmeübertrager, insbesondere Chiller, der in einem Wärmeübertragerabschnitt des Kühlmittelkreislaufs angeordnet ist und mit einem Kältemittelkreislauf des Kraftfahrzeugs verbunden ist; und mit einem elektrischen Heizelement, das an einem Heizabschnitt des Kühlmittelkreislaufs angeordnet ist und dazu eingerichtet ist, im Kühlmittelkreislauf zirkulierendes Kühlmittel bedarfsweise zu erwärmen.

Ein solcher in einem Kraftfahrzeug einsetzbarer Kühlmittelkreislauf ist beispielsweise aus der WO 2021/122949 A1 bekannt, Ferner wird auf die US 2012/225341 A1, US 2017I152957 A1 und WO 2016/208550 A1 hingewiesen, aus denen ebenfalls Kühlmittelkreisläufe mit Mehrwegventileinrichtungen bekannt sind.

Aus dem Stand der Technik sind verschiedene Ansätze von Kühlmittelkreisläufen mit Heizelementen bekannt. Hierzu wird beispielweise verwiesen auf die US 2018 272 830 A1, US 2015 121 922 A1 und die CN 111 731 068 A.

In solchen Kühlmittekreisläufen werden Misch- und Umschaltventile eingesetzt und dazu verwendet, den Kühlmittel-Volumenstrom nach Bedarf auf die zu kühlenden bzw. zu erwärmenden Komponenten zu verteilen. Die Einbindung der Batteriespeichereinrichtung erfolgt dabei üblicherweise mit einem Umschaltventil, so dass die Batteriespeichereinrichtung nur komplett oder nicht eingebunden werden kann. Ferner ist das Heizelement üblicherweise nicht multifunktional einsetzbar, sondern dient lediglich der Erwärmung von Kühlmittel für eine bestimmte Komponente, wie beispielsweise der Batteriespeichereinrichtung.

Die der Erfindung zu Grunde liegende Aufgabe wird darin gesehen, einen Kühlmittelkreislauf für ein zumindest teilweise elektrisch angetriebenes Kraftfahrzeug anzugeben, bei dem das Heizelement vielseitig einsetzbar ist und der Aufbau des Kühlmittelkreislaufs vereinfacht ist.

Diese Aufgabe wird gelöst durch ein Kraftfahrzeug mit den Merkmalen des Patentanspruchs 1. Vorteilhafte Ausgestaltungen mit zweckmäßigen Weiterbildungen sind in den abhängigen Patentansprüchen angegeben.

Vorgeschlagen wird also ein zumindest teilweise elektrisch angetriebenes Kraftfahrzeug mit einem Kühlmittelkreislauf und einem Kältemittelkreislauf, wobei der Kühlmittelkreislauf ausgeführt ist mit
einem ersten Kühlmittelstrang mit einer ersten Kühlmittelpumpe, wobei der erste Kühlmittelstrang mit einer Batteriespeichereinrichtung zu deren Kühlung oder Erwärmung verbunden ist;
einem zweiten Kühlmittelstrang mit einer zweiten Kühlmittelpumpe, wobei der zweite Kühlmittelstrang mit weiteren Kraftfahrzeugkomponenten, insbesondere antriebsseitigen Komponenten, zu deren Kühlung oder Erwärmung verbunden ist;
einem Wärmeübertrager, insbesondere Chiller, der in einem Wärmeübertragerabschnitt des Kühlmittelkreislaufs angeordnet ist und mit dem Kältemittelkreislauf des Kraftfahrzeugs verbunden ist;
einem elektrischen Heizelement, das an einem Heizabschnitt des Kühlmittelkreislaufs angeordnet ist und dazu eingerichtet ist, im Kühlmittelkreislauf zirkulierendes Kühlmittel bedarfsweise zu erwärmen.

Dabei ist vorgesehen, dass der erste Kühlmittelstrang, der zweite Kühlmittelstrang und der Heizabschnitt mittels einer Mehrwegventileinrichtung miteinander verbunden sind.

Mittels der Mehrwegeventileinrichtung ist es möglich den Heizabschnitt und somit das Heizelement mit den verschiedenen Kühlmittelsträngen zu verbinden, so dass mittels des Heizelements erwärmtes Kühlmittel nicht nur in einem Kühlmittelstrang genutzt werden kann.

Dabei ist die Mehrwegventileinrichtung dazu eingerichtet, den Heizabschnitt mit dem ersten Kühlmittelstrang und mit dem zweiten Kühlmittelstrang zu verbinden, so dass Kühlmittel durch den Heizabschnitt sowie durch den ersten Kühlmittelstrang und den zweiten Kühlmittelstrang strömt. Mit anderen Worten kann die Mehrwegeventileinrichtung so eingestellt werden, dass der Kühlmittelvolumenstrom entweder gesamthaft durch den ersten Kühlmittelstrang und den Heizabschnitt strömt oder gesamthaft durch den zweiten Kühlmittelstrang und den Heizabschnitt strömt. Ferner kann die Mehrwegeventileinrichtung auch so eingestellt werden, dass jeweilige Teilvolumenströme durch den ersten und den zweiten Kühlmittelstrang und den Heizabschnitt strömen können.

Bei dem Kühlmittelkreislauf kann die Mehrwegventileinrichtung dazu eingerichtet sein, den Heizabschnitt von dem ersten Kühlmittelstrang und dem zweiten Kühlmittelstrang zu trennen, so dass Kühlmittel unter Umgehung des Heizabschnitts durch den ersten Kühlmittelstrang oder/und den zweiten Kühlmittelstrang strömt. Die Mehrwegventileinrichtung kann also derart eingestellt werden, dass der Heizabschnitt bzw. das Heizelement umgangen werden kann.

Bei dem Kühlmittelkreislauf ist mittels des Wärmeübertragers, insbesondere Chillers, eine Wärmepumpenfunktion ermöglicht, derart, dass in dem Kühlmittelkreislauf zirkulierendes Kühlmittel im Wärmeübertrager Wärme an das Kältemittel des Kältemittelkreislaufs abgibt. Mit anderen Worten kann Abwärme, die im Kühlmittelkreislauf beispielsweise von der Batteriespeichereinrichtung oder antriebsseitigen Komponenten abzuführen ist, im Wärmeübertrager an das Kältemittel des Kältemittkreislaufs abgegeben werden.

Bei dem Kühlmittelkreislauf kann der Wärmeübertrager, insbesondere Chiller, zwischen der Mehrventileinrichtung und der zweiten Kühlmittelpumpe angeordnet sein.

Der Kühlmittelkreislauf kann mehrere Verbindungsabschnitte aufweisen, welche den ersten Kühlmittelstrang, den zweiten Kühlmittelstrang, den Heizabschnitt und den Wärmeübertragerabschnitt strömungstechnisch miteinander verbinden. Dabei kann stromabwärts von dem Wärmeübertrager und stromaufwärts von der zweiten Kühlmittelpumpe beispielweise ein Verbindungsabschnitt abzweigen, der als Bypassabschnitt für den zweiten Kühlmittelstrang dient. Hierdurch ist es möglich, das Durchströmen des zweiten Kältemittelstrangs bedarfsweise zu unterbinden.

Bei dem Kühlmittelkreislauf kann der erste Kühlmittelstrang einen Spülabschnitt aufweisen, der stromabwärts von der Batteriespeichereinrichtung abzweigt und stromaufwärts von der ersten Kühlmittelpumpe mündet. Hierdurch kann in Abhängigkeit von einer Stellung der Mehrwegventileinrichtung eine optionale Spülfunktion für die Batteriespeichereinrichtung ermöglicht werden.

Bei dem Kühlmittelkreislauf kann die Mehrwegventileinrichtung wenigstens drei Ventilanschlüsse aufweisen, wobei ein erster Ventilanschluss mit dem Heizabschnitt, ein zweiter Ventilanschluss mit dem ersten Kühlmittelstrang und ein dritter Ventilanschluss mit dem Wärmeübertragerabschnitt verbunden ist.

Das Kraftfahrzeug mit zumindest teilweise elektrischem Antrieb weist einen oben beschriebenen Kühlmittelkreislauf auf. Das Kraftfahrzeug weist auch einen für die Innenraum-Klimatisierung eingesetzten Kältemittelkreislauf auf. Dieser Kältemittelkreislauf steht mittels des Wärmeübertragers, insbesondere Chillers, mit dem Kühlmittelkreislauf in thermischer Wirkverbindung.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: eine schematische und vereinfachte Darstellung eines Kühlmittelkreislaufs in einem Kraftfahrzeug;
- Fig. 2: eine schematische und vereinfachte Darstellung einer Mehrwegventileinrichtung für den Kühlmittelkreislauf;
- Fig. 3: ein schematisches und vereinfachtes Diagramm, in dem verschiedene Öffnungsstellungen der Mehrwegventileinrichtung illustriert sind;
- Fig. 4: ein Beispiel eines Betriebszustands des Kühlmittelkreislaufs;
- Fig. 5: ein Beispiel eines Betriebszustands des Kühlmittelkreislaufs;
- Fig. 6: ein Beispiel eines Betriebszustands des Kühlmittelkreislaufs;
- Fig. 7: ein Beispiel eines Betriebszustands des Kühlmittelkreislaufs;
- Fig. 8: ein Beispiel eines Betriebszustands des Kühlmittelkreislaufs.

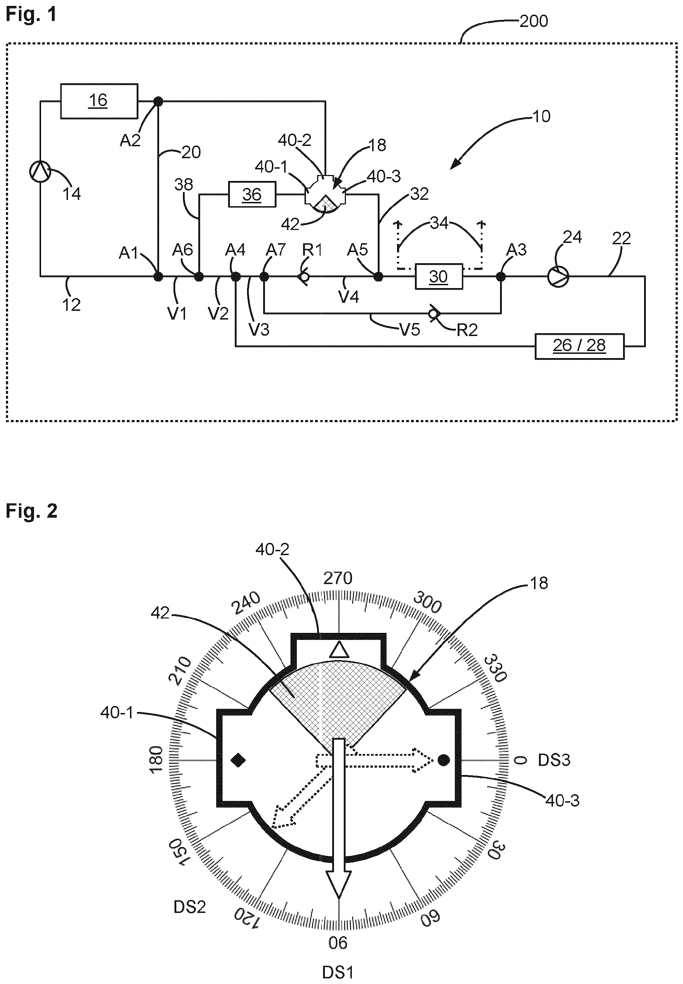

Fig. 1 zeigt vereinfacht und schematisch eine Topologie eines Kühlmittelkreislaufs 10. Ein solcher Kühlmittelkreislauf 10 ist in einem zumindest teilweise elektrisch angetriebenen Kraftfahrzeug 200, etwa einem Hybridfahrzeug oder einem Elektrofahrzeug, eingesetzt, was in Fig. 1 durch das gestrichelte Rechteck illustriert ist.

Der Kühlmittelkreislauf 10 weist einen ersten Kühlmittelstrang 12 auf mit einer ersten Kühlmittelpumpe 14, wobei der erste Kühlmittelstrang 12 mit einer Batteriespeichereinrichtung 16 zu deren Kühlung oder Erwärmung verbunden ist.

Der erste Kühlmittelstrang 12 beginnt in dieser beispielhaften Topologie bei einem Abzweig A1 und endet an einer später noch genauer beschriebenen Mehrwegventileinrichtung 18. Optional kann der erste Kühlmittelstrang 12 einen Spülabschnitt 20 aufweisen, der stromabwärts von der Batteriespeichereinrichtung 16 abzweigt (Abzweig A2) und stromaufwärts von der ersten Kühlmittelpumpe 14 mündet (beim Abzweig A1).

Der Kühlmittelkreislauf 10 weist einen zweiten Kühlmittelstrang 22 mit einer zweiten Kühlmittelpumpe 24 auf, wobei der zweite Kühlmittelstrang 22 mit weiteren Kraftfahrzeugkomponenten 26, insbesondere antriebsseitigen Komponenten wie Elektromotor(en), Steuergeräte etc. zu deren Kühlung oder Erwärmung verbunden ist. Der zweiten Kühlmittelstrang 22 umfasst üblicherweise auch einen Kühler 28, der hier vereinfacht und schematisch zusammen mit den Kraftfahrzeugkomponenten 26 dargestellt ist.

Der zweite Kühlmittelstrang 22 beginnt in dieser beispielhaften Topologie bei einem Abzweig A3 und endet an einem Abzweig A4.

Der Kühlmittelkreislauf 10 weist einen Wärmeübertrager 30 auf, der insbesondere auch als Chiller bezeichnet werden kann. Der Wärmeübertrager 30 ist in einem Wärmeübertragerabschnitt 32 des Kühlmittelkreislaufs angeordnet. Ferner ist er mit einem hier nur angedeuteten Kältemittelkreislauf 34 des Kraftfahrzeugs 200 verbunden.

Der Wärmeübertragerabschnitt 32 beginnt in dieser beispielhaften Topologie bei der Mehrwegventileinrichtung 18 und endet an dem Abzweig A3. Wie bereits oben erwähnt, beginnt bei dem Abzweig A3 der zweite Kühlmittelstrang 22. Mit anderen Worten kann auch gesagt werden, dass der Wärmeübertrager 30 zwischen der Mehrventileinrichtung 18 und der zweiten Kühlmittelpumpe 24 angeordnet ist.

Der Wärmeübertragerabschnitt 32 weist in diesem Beispiel noch einen Abzweig A5 auf, der in Strömungsrichtung von Kühlmittel zwischen der Mehrwegventileinrichtung 18 und dem Wärmeübertrager 30 angeordnet ist.

Der Kühlmittelkreislauf 10 umfasst ferner ein elektrisches Heizelement 36, das an einem Heizabschnitt 38 des Kühlmittelkreislaufs 10 angeordnet ist. Das Heizelement 36 ist dazu eingerichtet, im Kühlmittelkreislauf 10 zirkulierendes Kühlmittel bedarfsweise zu erwärmen.

Der Heizabschnitt 38 erstreckt sich in dieser beispielhaften Topologie zwischen der Mehrwegventileinrichtung 18 und einem Abzweig A6. Im gezeigten Beispiel ist der Abzweig A6 stromaufwärts von dem Abzweig A1 vorgesehen, an dem der erste Kühlmittelstrang 12 beginnt.

Der erste Kühlmittelstrang 12, der zweite Kühlmittelstrang 22 und der Heizabschnitt 38 sind in dieser beispielhaften Topologie also mittels der bereits erwähnten Mehrwegventileinrichtung 18 miteinander verbunden.

In dem Kühlmittelkreislauf 10 ist die Mehrwegventileinrichtung 18 dazu eingerichtet ist, den Heizabschnitt 38 mit dem ersten Kühlmittelstrang 12 oder/und mit dem zweiten Kühlmittelstrang 22 zu verbinden, so dass Kühlmittel durch den Heizabschnitt 38 sowie durch den ersten Kühlmittelstrang 12 oder/und den zweiten Kühlmittelstrang 22 strömt.

Ferner ist die Mehrwegventileinrichtung 18 dazu eingerichtet, den Heizabschnitt 38 von dem ersten Kühlmittelstrang 12 und dem zweiten Kühlmittelstrang 22 zu trennen, so dass Kühlmittel unter Umgehung des Heizabschnitts 38 durch den ersten Kühlmittelstrang 12 oder/und den zweiten Kühlmittelstrang 22 strömt.

Der Kühlmittelkreislauf 10 weist in der beispielhaften Topologie mehrere Verbindungsabschnitte V1 bis V5 auf, welche den ersten Kühlmittelstrang 12, den zweiten Kühlmittelstrang 22, den Heizabschnitt 38 und den Wärmeübertragerabschnitt 32 strömungstechnisch miteinander verbinden.

In der beispielhaften Topologie erstreckt sich der Verbindungsabschnitt V1 zwischen den Abzweigen A1 und A6.

In der beispielhaften Topologie erstreckt sich der Verbindungsabschnitt V2 zwischen den Abzweigen A4 und A6.

In der beispielhaften Topologie erstreckt sich der Verbindungsabschnitt V3 zwischen dem Abzweig A4 und einem Abzweig A7.

In der beispielhaften Topologie erstreckt sich der Verbindungsabschnitt V4 von dem Abzweig A7 zu dem Abzweig A5.

In der beispielhaften Topologie erstreckt sich der Verbindungsabschnitt V5 von dem Abzweig A3 zu dem Abzweig A7. Mit anderen Worten zweigt der Verbindungsabschnitt V5 stromabwärts von dem Wärmeübertrager 30 und stromaufwärts von der zweiten Kühlmittelpumpe 24 ab, so dass er als Bypassabschnitt für den zweiten Kühlmittelstrang 22 bzw. die Komponenten 26 bzw. den Kühler 28 dient.

Es wird darauf hingewiesen, dass die hier gezeigte Anzahl an Abzweigen A1 bis A7 und Verbindungsabschnitten V1 bis V5 nicht einschränkend zu verstehen ist. Durch die gewählte Art der beispielhaften Darstellung der Topologie des Kühlmittelkreislaufs 10 ist es allerdings möglich, die Funktionsweise genau zu beschreiben, weil jeder Leitungsabschnitt des Kühlmittelkreislaufs 10 angesprochen werden kann.

Insbesondere bei den Abzweigen A1 bis A7 und den Verbindungsabschnitten V1 bis V5 ist es aber selbstverständlich möglich, das zwei oder mehr Abzweige bei der Umsetzung eines Kühlmittelkreislaufs 10 zusammengefasst werden. Beispielsweise ist es denkbar, dass die hier einzeln illustrierten Abzweige A4 und A7 miteinander kombiniert werden könnten, wobei der Verbindungsabschnitt V5 dann in den Abzweig A4 münden könnte, so dass der Abzweig A7 entfallen könnte. Hierdurch würde auch der Verbindungsabschnitt V3 entfallen, auch wenn sich an dem grundsätzlichen strömungstechnischen Aufbau des Kühlmittelkreislaufs 10 nichts ändert.

Der Vollständigkeit halber wird noch darauf hingewiesen, dass in der beispielhaften Topologie des Kühlmittelkreislaufs 10 zwei optionale Rückschlagventile R1 und R2 gezeigt sind. Dabei ist das Rückschlagventil R1 zwischen den beiden Kühlmittelsträngen 12, 22 angeordnet, insbesondere ist es im Verbindungsabschnitt V4 vorgesehen, wobei es stromaufwärts von dem Abzweig A5 angeordnet ist. Das Rückschlagventil R2 ist in dem Verbindungsabschnitt V5 (Bypassabschnitt) zwischen den Abzweigen A3 und A7 angeordnet. Selbstverständlich können in dem Kühlmittelkreislauf 10 weitere bzw. andere Ventileinrichtungen vorgesehen sein, die hier aber nicht im Detail dargestellt sind.

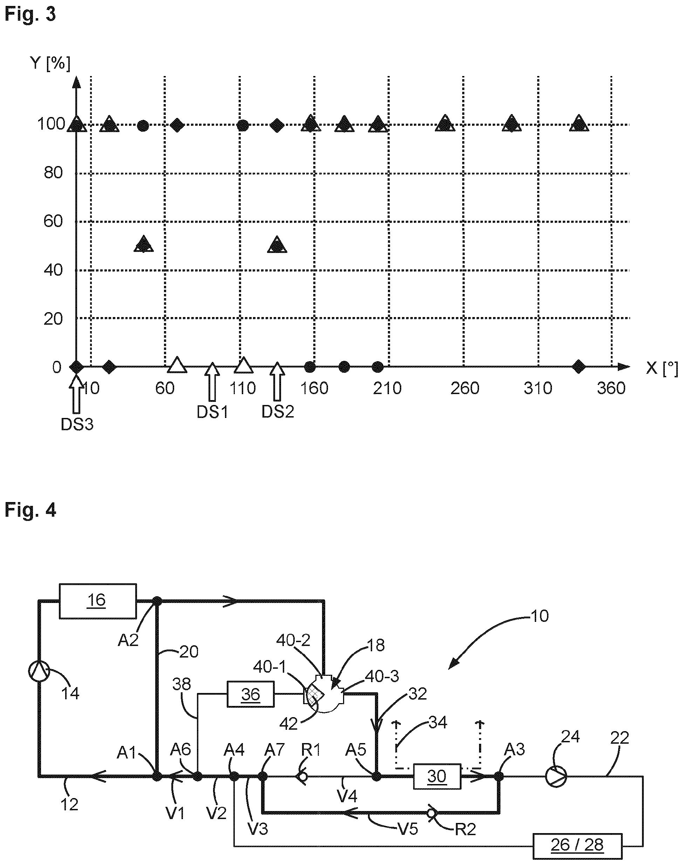

Die Funktionsweise der Mehrwegventileinrichtung wird nachfolgend unter Bezugnahme auf die Fig. 2 und 3 genauer beschrieben.

Fig. 2 zeigt vereinfacht und schematisch eine Mehrwegventileinrichtung 18, die in einem oben beschriebenen Kühlmittelkreislauf 10 eingesetzt werden kann. Die Mehrwegventileinrichtung 18 umfasst beispielhaft drei Ventilanschlüsse 40-1, 40-2 und 40-3.

Die Ventilanschlüsse 40-1, 40-2, 40-3 sind beispielhaft entlang eines Kreises angeordnet, wobei zwischen den Ventilanschlüssen 40-1, 40-2 und 40-2, 40-3 jeweils ein Winkel von etwa 90° gebildet ist. Zwischen den Ventilanschlüssen 40-1 und 40-3 ist ein Winkel von etwa 180° gebildet. Die Anordnung von Ventilanschlüssen 40-1, 40-2, 40-3 zueinander kann bei einer konkreten Ausgestaltung einer Mehrwegventileinrichtung auch mit anderen Winkeln ausgeführt sein.

Die Mehrwegventileinrichtung 18 umfasst eine Schiebereinrichtung 42, die dazu eingerichtet ist, die Ventilanschlüsse 40-1, 40-2, 40-3 ganz oder teilweise zu öffnen bzw. zu schließen. Die Schiebereinrichtung 42 kann dabei entlang eines Kreises in verschiedene Schaltstellungen eingestellt werden.

Die Schiebereinrichtung 42 weist eine kreissektorförmige oder ringsektorförmige Ausgestaltung auf, derart, dass ein Ventilanschluss 40-1, 40-2, 40-3 mittels einer äußeren Umfangsfläche 44 der Schiebereinrichtung 42 abgedichtet werden kann.

Fig. 3 zeigt vereinfacht in einem Diagramm, bei welcher Drehstellung der Schiebereinrichtung 42 welcher Ventilanschluss 40-1, 40-2, 40-3 (teilweise) geöffnet bzw. (teilweise) geschlossen ist. Dem Ventilanschluss 40-1 ist dabei das schwarze Quadrat zugeordnet. Dem Ventilanschluss 40-2 ist das nicht gefüllte Konturdreieck zugeordnet. Dem Ventilanschluss 40-3 ist der schwarze Kreis bzw. Punkt zugeordnet.

In dem Diagramm sind auf der X-Achse Drehstellungen in Grad [°] eingetragen. Auf der Y-Achse ist ein Öffnungsgrad der Ventileinrichtungen 40-1, 40-2, 40-3 in Prozent [%] angegeben.

Nimmt man beispielsweise die Drehstellung der Fig. 2, in der die Schiebereinrichtung 42 in einer 90°-Drehstellung DS1 (vertikale, durchgezogene Linie in Fig. 3) positioniert ist, kann aus dem Diagramm der Fig. 3, aber natürlich auch aus der Fig. 2, folgendes entnommen werden: Der Ventilanschluss 40-2 ist vollständig geschlossen (Öffnungsgrad 0%) und die Ventilanschlüsse 40-1 und 40-3 sind vollständig geöffnet (Öffnungsgrad 100%).

Wird die Schiebereinrichtung 42 beispielsweise in eine Drehstellung DS2 von etwa 135° eingestellt, sind die Ventilanschlüsse 40-2 und 40-3 teilweise geöffnet (jeweiliger Öffnungsgrad 50%). Der Ventilanschluss 40-1 ist dabei vollständig geöffnet (Öffnungsgrad 100%).

Wird die Schiebereinrichtung 42 in eine Drehstellung DS3 von etwa 0° eingestellt, sind die Ventilanschlüsse 40-2 und 40-3 vollständig geöffnet (jeweiliger Öffnungsgrad 100%). Der Ventilanschluss 40-1 ist dabei vollständig geschlossen (Öffnungsgrad 0%).

Die Drehstellungen DS1. DS2. DS3 sind in der Fig. 2 bzw. der Fig. durch jeweilige (gestrichelte) Konturpfeile angedeutet. In Fig. 2 ist die Schiebereinrichtung 42 lediglich in der Drehstellung DS1 dargestellt. Es ist aber selbsterklärend, wie die Schiebereinrichtung 42 für die Drehstellungen DS2 und DS3 ausgerichtet sein muss unter Berücksichtigung des jeweils zugeordneten gestrichelten Konturpfeils. Es wird darauf hingewiesen, dass in den Fig. 2 und 3 die (gestrichelten) Konturpfeile lediglich zur Illustration der Drehstellungen DS1, DS2 und DS3 dienen, ebenso wie die in Fig. 2 enthaltene Winkeleinteilung.

Aus den Erklärungen zu den Fig. 2 und 3 bezüglich der Funktionsweise der Mehrwegventileinrichtung 18 ist es klar, dass mittels der Mehrwegventileinrichtung 18 unterschiedliche Betriebszustände für den Kühlmittelkreislauf 10 eingestellt werden können. Dabei ist die Mehrwegventileinrichtung 18 so ausgeführt, dass sie nicht nur als Umstellventil, sondern auch als Mischventil eingesetzt werden kann.

Wie sich aus der Zusammenschau der Fig. 1 und 2 ergibt, ist der erster Ventilanschluss 40-1 mit dem Heizabschnitt 36 verbunden. Der zweite Ventilanschluss 40-2 ist mit dem ersten Kühlmittelstrang 12 verbunden. Der dritte Ventilanschluss 40-3 ist mit dem Wärmeübertragerabschnitt 32 verbunden.

Nachfolgend werden unter auf die Fig. 4 bis 8 verschiedene Betriebszustände für den Kühlmittelkreislauf 10 erläutert. Dabei werden jeweils aktive Leitungsabschnitte des Kühlmittelkreislaufs mit dickeren schwarzen Linien dargestellt verglichen mit der Fig. 1.

Fig. 4 zeigt einen Betriebszustand, in dem die Schiebereinrichtung 42 der Mehrwegventileinrichtung 18 in der Drehstellung DS3 eingestellt ist. Mit anderen Worten ist der Ventilanschluss 40-1 geschlossen und die Ventilanschlüsse 40-2 und 40-3 sind (vollständig) geöffnet. In einem solchen Betriebszustand kann die Batteriespeichereinrichtung 16 (aktiv) gekühlt werden. Das Kühlmittel wird durch die erste Kühlmittelpumpe 14 zirkuliert. Stromabwärts von der Batteriespeichereinrichtung 16 strömt das Kühlmittel durch die Mehrwegventileinrichtung 18 und dann den Wärmeübertrager 30. Dort kann das Kühlmittel Wärme an den Kältemittelkreislauf 34 des Kraftfahrzeugs abgeben. Die zweite Kühlmittelpumpe 24 ist in diesem Betriebszustand inaktiv. Insbesondere hemmt sie einen Durchfluss von Kühlmittel durch den zweiten Kühlmittelstrang 22. Ergänzend bzw. alternativ könnte stromabwärts von dem Abzweig A3 und von der zweiten Kühlmittelpumpe 24 eine Ventileinrichtung angeordnet sein, um den zweiten Kühlmittelstrang 22 inaktiv zu schalten bzw. zu entkoppeln.

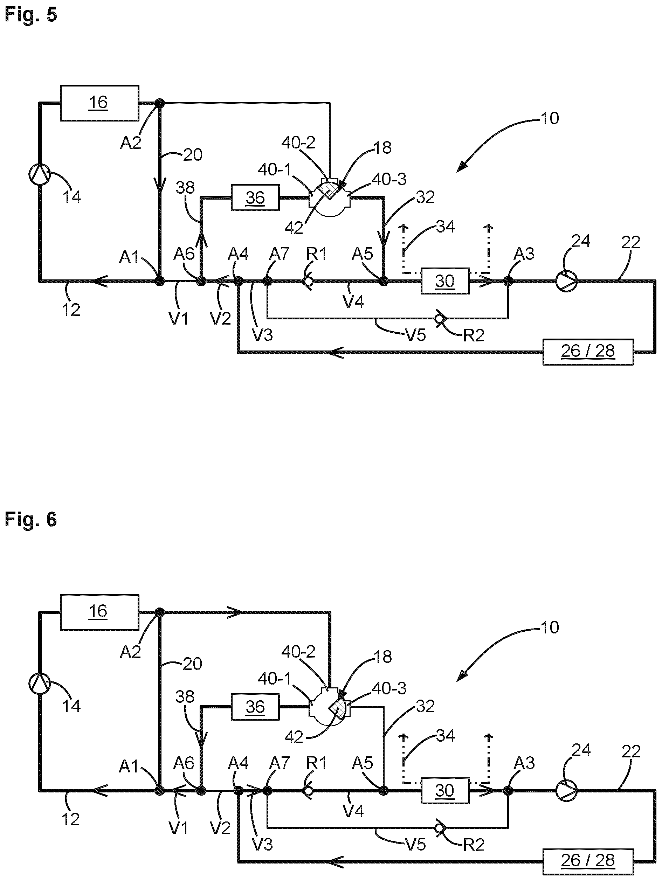

Fig. 5 zeigt einen Betriebszustand, in dem die Schiebereinrichtung 42 der Mehrwegventileinrichtung 18 in der Drehstellung DS1 eingestellt ist. Mit anderen Worten ist der Ventilanschluss 40-2 geschlossen und die Ventilanschlüsse 40-1 und 40-3 sind (vollständig) geöffnet.

In einem solchen Betriebszustand der Fig. 5 wird der Wärmeübertrager 30 als Wärmepumpe genutzt, um aus dem zweiten Kühlmittelstrang 22, insbesondere den Komponenten 26 abgeführte Wärme an den Kältemittelkreislauf 34 abzugeben. Die zweite Kühlmittelpumpe 24 ist aktiviert. In diesem Betriebszustand besteht die Möglichkeit, das Kühlmittel vor dem Durchlauf durch den Wärmeübertrager 30 mittels des Heizelements 36 zusätzlich zu erwärmen. Somit kann also, wenn die Komponenten 26 nicht ausreichend Wärme abgeben bzw. der Umgebungsluft am Kühler 28 nicht ausreichend Wärme entzogen werden kann, das Kühlmittel unter Einsatz des Heizelements 36 erwärmt werden.

In diesem Betriebszustand der Fig. 5 kann die erste Kühlmittelpumpe 14 ebenfalls aktiviert sein. Das Kühlmittel zirkuliert dann stromabwärts von der Batteriespeichereinrichtung 16 durch den Spülabschnitt 20. In dieser Verschaltung kann die Batteriespeichereinrichtung 16 gespült werden.

Fig. 6 zeigt einen Betriebszustand, in dem die Schiebereinrichtung 42 der Mehrwegventileinrichtung 18 in einer Drehstellung von etwa 180°eingestellt ist. Mit anderen Worten ist der Ventilanschluss 40-3 geschlossen und die Ventilanschlüsse 40-1 und 40-2 sind (vollständig) geöffnet.

In diesem Betriebszustand der Fig. 6 ist die erste Kühlmittelpumpe 14 aktiviert und das Kühlmittel zirkuliert stromabwärts von der Batteriespeichereinrichtung 16 durch die Mehrwegventileinrichtung 18 und den Heizabschnitt 38 bzw. das Heizelement 36. Somit kann das im ersten Kühlmittelstrang 12 zirkulierende Kühlmittel mittels des Heizelements 36 erwärmt werden. Mit anderen Worten kann in diesem Betriebszustand die Batteriespeichereinrichtung 16 bedarfsweise geheizt werden durch das am Heizelement 36 erwärmte Kühlmittel.

In diesem Betriebszustand der Fig. 6 ist die zweite Kühlmittelpumpe 24 auch aktiviert. Das Kühlmittel zirkuliert im zweiten Kühlmittelstrang 22 und durch den Wärmeübertrager 30. Somit kann an den Komponenten 26 anfallende Wärme abgeführt werden und der Wärmeübertrager 30 kann als Wärmepumpe im Kältemittelkreislauf 34 des Kraftfahrzeugs betrieben werden. Mit anderen Worten können die Komponenten 26 oder/und die am Kühler anstehende Umgebungsluft als Wärmequellen dienen, um das Kühlmittel zu erwärmen, so dass am Wärmeübertrager Wärme an den Kältemittelkreislauf 34 abgegeben werden kann. Ferner kann in diesem Betriebszustand auch ein Heizen der Batteriespeichereinrichtung 16 durchgeführt werden.

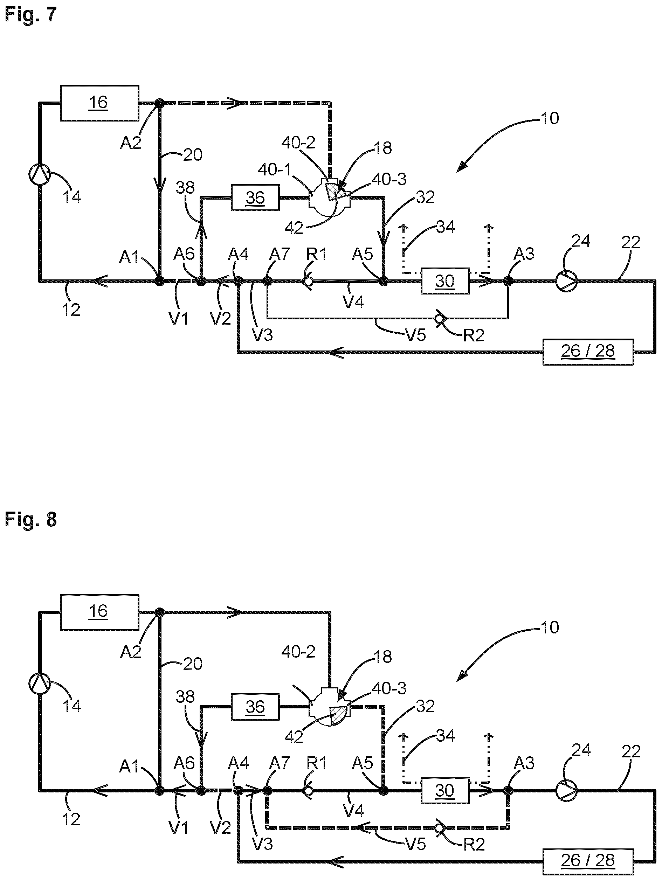

Fig. 7 zeigt einen Betriebszustand, in dem die Schiebereinrichtung 42 der Mehrwegventileinrichtung 18 in der Drehstellung DS2 eingestellt ist. Mit anderen Worten ist der Ventilanschluss 40-1 vollständig geöffnet und die Ventilanschlüsse 40-2 und 40-3 sind teilweise geöffnet.

In einem solchen Betriebszustand der Fig. 7 kann das Heizelement 36 dazu eingesetzt werden, Kühlmittel für den zweiten Kühlmittelstrang 22 und den Wärmeübertrager 30 zusätzlich zu erwärmen, so dass die Wärmepumpenfunktion am Wärmeübertrager 30 unterstützt werden kann. Das Heizelement 36 kann aber auch gleichzeitig dazu eingesetzt werden, Kühlmittel, das im ersten Kühlmittelstrang 12 zirkuliert, zu erwärmen, so dass auch die Batteriespeichereinrichtung erwärmt bzw. geheizt werden kann.

Fig. 8 zeigt einen Betriebszustand, in dem die Schiebereinrichtung 42 der Mehrwegventileinrichtung 18 in einer Drehstellung von etwa 225° eingestellt ist. Mit anderen Worten der Ventilanschluss 40-3 teilweise geöffnet und die Ventilanschlüsse 40-1 und 40-2 sind vollständig geöffnet.

In diesem Betriebszustand der Fig. 8 dient das Heizelement 36 vor allem dem Heizen der Batteriespeichereinrichtung 16, in etwa vergleichbar zum Betriebszustand der Fig. 6. Ferner ist im zweiten Kühlmittelstrang 22 die Wärmepumpenfunktion unter Einbindung des Wärmeübertragers 30 realisiert, ebenfalls vergleichbar zum Betriebszustand der Fig. 6. Aufgrund der Einstellung der Mehrwegventileinrichtung 18 kann aber in diesem Betriebszustand auch ein Austausch von Kühlmittel zwischen den beiden Kühlmittelsträngen 12, 22 ermöglicht werden. Insbesondere kann der Wärmebedarf für die Wärmepumpenfunktion bzw. das Batterieheizen mittels der Mehrventileinrichtung 18 optimal eingestellt bzw. geregelt werden.

Bezugnehmend auf die oben gezeigten verschiedenen Betriebszustände der Fig. 4 bis 8 kann also in dem Kühlmittelkreislauf 10 mittels des Wärmeübertragers 30 eine Wärmepumpenfunktion ermöglicht werden, derart, dass in dem Kühlmittelkreislauf 10 zirkulierendes Kühlmittel im Wärmeübertrager 30 Wärme an das Kältemittel des Kältemittelkreislaufs 34 abgibt.

## Patentansprüche

1. Kraftfahrzeug (200) mit zumindest teilweise elektrischem Antrieb, einem Kühlmittelkreislauf (10) und einem Kältemittelkreislauf (34), wobei der Kühlmittelkreislauf ausgeführt ist mit
einem ersten Kühlmittelstrang (12) mit einer ersten Kühlmittelpumpe (14), wobei der erste Kühlmittelstrang (12) mit einer Batteriespeichereinrichtung (16) zu deren Kühlung oder Erwärmung verbunden ist; einem zweiten Kühlmittelstrang (22) mit einer zweiten Kühlmittelpumpe (24), wobei der zweite Kühlmittelstrang (22) mit weiteren Kraftfahrzeugkomponenten (26, 28), insbesondere antriebsseitigen Komponenten, zu deren Kühlung oder Erwärmung verbunden ist;
einem Wärmeübertrager (30), insbesondere Chiller, der in einem Wärmeübertragerabschnitt (32) des Kühlmittelkreislaufs (10) angeordnet ist und mit dem Kältemittelkreislauf (34) des Kraftfahrzeugs (200) verbunden ist, so dass der Kühlmittelkreislauf (10) und der Kältemittelkreislauf (34) in thermischer Wirkverbindung stehen;
einem elektrischen Heizelement (36), das an einem Heizabschnitt (38) des Kühlmittelkreislaufs (10) angeordnet ist und dazu eingerichtet ist, im Kühlmittelkreislauf (10) zirkulierendes Kühlmittel bedarfsweise zu erwärmen, wobei
der erste Kühlmittelstrang (12), der zweite Kühlmittelstrang (22) und der Heizabschnitt (38) mittels einer Mehrwegventileinrichtung (18) miteinander verbunden sind,
**dadurch gekennzeichnet, dass** mittels des Wärmeübertragers (30) eine Wärmepumpenfunktion ermöglicht ist, derart dass in dem Kühlmittelkreislauf (10) zirkulierendes Kühlmittel im Wärmeübertrager (30) Wärme an das Kältemittel des Kältemittelkreislaufs (34) abgibt, und dass die Mehrwegventileinrichtung (18) dazu eingerichtet ist, den Heizabschnitt (38) mit dem ersten Kühlmittelstrang (12) und mit dem zweiten Kühlmittelstrang (22) zu verbinden, so dass Kühlmittel durch den Heizabschnitt (38) sowie durch den ersten Kühlmittelstrang (12) und den zweiten Kühlmittelstrang (22) strömt.

2. Kraftfahrzeug (200) nach Anspruch 1, **dadurch gekennzeichnet, dass** die Mehrwegventileinrichtung (18) dazu eingerichtet ist, den Heizabschnitt (38) von dem ersten Kühlmittelstrang (12) und dem zweiten Kühlmittelstrang (22) zu trennen, so dass Kühlmittel unter Umgehung des Heizabschnitts (38) durch den ersten Kühlmittelstrang (12) oder/und den zweiten Kühlmittelstrang (22) strömt.

3. Kraftfahrzeug (200) nach Anspruch 1 oder 2, **dadurch gekennzeichnet, dass** der Wärmeübertrager (30), insbesondere Chiller, zwischen der Mehrventileinrichtung (18) und der zweiten Kühlmittelpumpe (24) angeordnet ist.

4. Kraftfahrzeug (200) nach einem der vorhergehenden Ansprüche,
**dadurch gekennzeichnet, dass** er mehrere Verbindungsabschnitte (V1-V5) aufweist, welche den ersten Kühlmittelstrang (12), den zweiten Kühlmittelstrang (22), den Heizabschnitt (38) und den Wärmeübertragerabschnitt (32) strömungstechnisch miteinander verbinden.

5. Kraftfahrzeug (200) nach Anspruch 6, **dadurch gekennzeichnet, dass** stromabwärts von dem Wärmeübertrager (30) und stromaufwärts von der zweiten Kühlmittelpumpe (24) ein Verbindungsabschnitt (V5) abzweigt, der als Bypassabschnitt für den zweiten Kühlmittelstrang (22) dient.

6. Kraftfahrzeug (200) nach einem der vorhergehenden Ansprüche,
**dadurch gekennzeichnet, dass** der erste Kühlmittelstrang (12) einen Spülabschnitt (20) aufweist, der stromabwärts von der Batteriespeichereinrichtung (16) abzweigt und stromaufwärts von der ersten Kühlmittelpumpe (14) mündet.

7. Kraftfahrzeug (200) nach einem der vorhergehenden Ansprüche,
**dadurch gekennzeichnet, dass** die Mehrwegventileinrichtung (18) wenigstens drei Ventilanschlüsse (40-1, 40-2, 40-3) aufweist, wobei ein erster Ventilanschluss (40-1) mit dem Heizabschnitt (38), ein zweiter Ventilanschluss (40-2) mit dem ersten Kühlmittelstrang (12) und ein dritten Ventilanschluss (40-3) mit dem Wärmeübertragerabschnitt (32) verbunden ist.

## Claims

1. Motor vehicle (200) with at least partially electric drive, a coolant circuit (10) and a refrigerant circuit (34), wherein the refrigerant circuit is formed with
a first coolant line (12) with a first coolant pump (14), wherein the first coolant line (12) is connected to a battery storage apparatus (16) for cooling or heating the battery storage apparatus; a second coolant line (22) with a second coolant pump (24), wherein the second coolant line (22) is connected to further motor vehicle components (26, 28), in particular drive-side components, for cooling or heating them;
a heat exchanger (30), in particular a chiller, which is arranged in a heat exchanger section (32) of the coolant circuit (10) and is connected to a refrigerant circuit (34) of the motor vehicle (200), such that the coolant circuit (10) and the refrigerant circuit (34) are in thermal operative connection;
an electrical heating element (36) which is arranged at a heating section (38) of the coolant circuit (10) and is designed to heat coolant circulating in the coolant circuit (10) as required, wherein
the first coolant line (12), the second coolant line (22) and the heating section (38) are connected to one another by means of a multi-way valve apparatus (18),
**characterized in that** a heat pump function is made possible by means of the heat exchanger (30), such that coolant circulating in the coolant circuit (10) in the heat exchanger (30) releases heat to the refrigerant of the refrigerant circuit (34), and **in that** the multi-way valve apparatus (18) is designed to connect the heating section (38) to the first coolant line (12) and to the second coolant line (22), so that coolant flows through the heating section (38) as well as through the first coolant line (12) and the second coolant line (22).

2. Motor vehicle (200) according to claim 1, **characterized in that** the multi-way valve apparatus (18) is designed to separate the heating section (38) from the first coolant line (12) and from the second coolant line (22), so that coolant flows through the first coolant line (12) and/or the second coolant line (22) while bypassing the heating section (38).

3. Motor vehicle (200) according to claim 1 or 2,
**characterized in that** the heat exchanger (30), in particular chiller, is arranged between the multi-way valve apparatus (18) and the second coolant pump (24).

4. Motor vehicle (200) according to any one of the preceding claims, **characterized in that** it has multiple connecting sections (V1-V5) which fluidically connect the first coolant line (12), the second coolant line (22), the heating section (38) and the heat exchanger section (32) to one another.

5. Motor vehicle (200) according to claim 6, **characterized in that**, downstream of the heat exchanger (30) and upstream of the second coolant pump (24), a connecting section (V5) branches off, which serves as a bypass section for the second coolant line (22).

6. Motor vehicle (200) according to any one of the preceding claims, **characterized in that** the first coolant line (12) has a flushing section (20) which branches off downstream of the battery storage apparatus (16) and opens upstream of the first coolant pump (14).

7. Motor vehicle (200) according to any one of the preceding claims, **characterized in that** the multi-way valve apparatus (18) has at least three valve connections (40-1, 40-2, 40-3), wherein a first valve connection (40-1) is connected to the heating section (38), a second valve connection (40-2) is connected to the first coolant line (12), and a third valve connection (40-3) is connected to the heat exchanger section (32).

## Revendications

1. Véhicule automobile (200) au moins partiellement électrique avec un circuit de liquide de refroidissement (10) et un circuit de liquide frigorigène (34), dans lequel le circuit de liquide de refroidissement est configuré avec
une première ligne de liquide de refroidissement (12) avec une première pompe de liquide de refroidissement (14), dans lequel la première ligne de liquide de refroidissement (12) est reliée à un appareil de stockage de batterie (16) pour son refroidissement ou chauffage ; une seconde ligne de liquide de refroidissement (22) avec une seconde pompe de liquide de refroidissement (24), dans lequel la seconde ligne de liquide de refroidissement (22) est reliée à d'autres composants de véhicule automobile (26, 28), en particulier des composants côté entraînement, pour leur refroidissement ou chauffage ;
un échangeur de chaleur (30), en particulier un refroidisseur, qui est agencé dans une section d'échangeur de chaleur (32) du circuit de liquide de refroidissement (10) et est relié au circuit de liquide frigorigène (34) du véhicule automobile (200), de sorte que le circuit de liquide de refroidissement (10) et le circuit de liquide frigorigène (34) soient en liaison active thermique ;
un élément de chauffage (36) électrique qui est agencé au niveau d'une section de chauffage (38) du circuit de liquide de refroidissement (10) et est conçu afin de chauffer en cas de besoin du liquide de refroidissement circulant dans le circuit de liquide de refroidissement, dans lequel
la première ligne de liquide de refroidissement (12), la seconde ligne de liquide de refroidissement (22) et la section de chauffage (38) sont reliées entre elles au moyen d'un appareil de vanne multivoies (18),
**caractérisé en ce qu'**une fonction de pompe à chaleur est permise au moyen de l'échangeur de chaleur (30) de telle manière que du liquide de refroidissement circulant dans le circuit de liquide de refroidissement (10) dans l'échangeur de chaleur (30) émette de la chaleur au liquide frigorigène du circuit de liquide frigorigène (34), et **en ce que** l'appareil de vanne multivoies (18) est conçu afin de relier la section de chauffage (38) à la première ligne de liquide de refroidissement (12) et à la seconde ligne de liquide de refroidissement (22), de sorte que du liquide de refroidissement s'écoule à travers la section de chauffage (38) ainsi qu'à travers la première ligne de liquide de refroidissement (12) et la seconde ligne de liquide de refroidissement (22).

2. Véhicule automobile (200) selon la revendication 1, **caractérisé en ce que** l'appareil de vanne multivoies (18) est conçu afin de séparer la section de chauffage (38) de la première ligne de liquide de refroidissement (12) et de la seconde ligne de liquide de refroidissement (22) de sorte que du liquide de refroidissement s'écoule à travers la première ligne de liquide de refroidissement (12) et/ou la seconde ligne de liquide de refroidissement (22) en contournant la section de chauffage (38).

3. Véhicule automobile (200) selon la revendication 1 ou 2,
**caractérisé en ce que** l'échangeur de chaleur (30), en particulier le refroidisseur, est agencé entre l'appareil de vanne multivoies (18) et la seconde pompe de liquide de refroidissement (24).

4. Véhicule automobile (200) selon l'une quelconque des revendications précédentes, **caractérisé en ce qu'**il présente plusieurs sections de liaison (V1-V5) qui relient fluidiquement entre elles la première ligne de liquide de refroidissement (12), la seconde ligne de liquide de refroidissement (22), la section de chauffage (38) et la section d'échangeur de chaleur (32).

5. Véhicule automobile (200) selon la revendication 6, **caractérisé en ce qu'**une section de liaison (V5) dérive en aval de l'échangeur de chaleur (30) et en amont de la seconde pompe de liquide de refroidissement (24), section qui sert de section de dérivation pour la seconde ligne de liquide de refroidissement (22).

6. Véhicule automobile (200) selon l'une quelconque des revendications précédentes, **caractérisé en ce que** la première ligne de liquide de refroidissement (12) présente une section de rinçage (20) qui dérive en aval de l'appareil de stockage de batterie (16) et débouche en amont de la première pompe de liquide de refroidissement (14).

7. Véhicule automobile (200) selon l'une quelconque des revendications précédentes, **caractérisé en ce que** l'appareil de vanne multivoies (18) présente au moins trois raccords de vanne (40-1,40-2, 40-3), dans lequel un premier raccord de vanne (40-1) est relié à la section de chauffage (38), un deuxième raccord de vanne (40-2) à la première ligne de liquide de refroidissement (12) et un troisième raccord de vanne (40-3) à la section d'échangeur de chaleur (32).
